# EUROPEAN PATENT SPECIFICATION

(11) **EP 0 654 592 B1**
(45) Date of publication and mention of the grant of the patent: **25.03.1998**
(21) Application number: 94114969.2
(22) Date of filing: 22.09.1994
(51) Int. Cl.: F02D 13/02, F02D 13/04, F02B 33/04, F02D 41/38

(54) **Two-cycle diesel engine**
Zweitakt-Dieselbrennkraftmaschine
Moteur diesel à deux temps

(30) Priority: 22.09.1993 JP 236499/93
(43) Date of publication of application: 24.05.1995
(73) Proprietor: YAMAHA HATSUDOKI KABUSHIKI KAISHA, Iwata-shi Shizuoka-ken, 438 (JP)
(72) Inventor: Ito, Hideaki, Iwata-shi, Shizuoka-ken, 438 (JP)
(74) Representative: Grünecker, Kinkeldey, Stockmair & Schwanhäusser Anwaltssozietät

(56) References cited:
- EP-A- 0 469 596
- EP-A- 0 603 914
- GB-A- 2 226 596
- GB-A- 2 233 388
- GB-A- 2 234 293
- US-A- 4 793 347
- US-A- 5 178 104
- PATENT ABSTRACTS OF JAPAN vol. 17, no. 423 (M-1458) 6 August 1993 & JP-A-05 086 922 (YAMAHA MOTOR CO LTD) 6 April 1993

## Description

This invention concerns a two-cycle diesel engine comprising an exhaust passage with an exhaust control valve for controlling the aperture of said exhaust passage and a scavenge passage arrangement with a scavenging control valve for controlling the rate of scavenging.

Some vehicles equipped with two-cycle diesel engines are equipped with an exhaust control valve to variably control the position of the upper edge of the exhaust passage, which makes possible the variable control of the exhaust timing and compression ratio. There are also vehicles equipped with a scavenging bypass passage, which links the various crank chambers, and others having a scavenging control valve providing aperture control to variably control the rate of scavenging among the various crank chambers.

A two-cycle diesel engine of the crankcase compression type having a control valve to control the amount of air flow to the combustion chamber and an exhaust control valve is described in the United States Patent No. 5,178,104. Said valves are controlled by a CPU to improve the exhaust gas composition at low and mid ranges of said diesel engine.

In the prior art, the engine operation control devices that controlled the apertures of the aforementioned control valves usually performed that aperture control of the foregoing control valves according to engine rpm and accelerator aperture (load).

The above described operation control devices of the prior art exercised control of the various control valves according to engine rpm and accelerator aperture, but no particular consideration was given to control these valves prior to and during engine starting. Thus, prior to and during staring, these valves sometimes were not in appropriate positions, causing poor staring properties, and degradation of emission properties directly after starting due to smoke evolution and the like.

In addition, since diesel engines are not normally equipped with a throttle valve, during braking and the like when fuel is not being supplied, a large amount of low temperature air is emitted through the exhaust system This can cause excessive cooling of the catalytic converter and the deterioration of its cleansing ability.

Furthermore, the above mentioned exhaust control valve and scavenging control valve are generally driven by step motors, entailing limitations upon the speed with at they may be operated. During rapid acceleration, the response of the aforementioned control valves is sluggish, with respect to the response speed for controlling fuel injection, and as a result, black smoke or white smoke can be generated. To wit, with conventional devices, during the above described periods of rapid acceleration, the rate of fuel injection is premised on the condition that the various control valves have been controlled to the appropriate aperture, however, due to the delay in their operation, they may have not yet reached the appropriate aperture position, and the increased rate of fuel injection at this time is believed to lead to the above described problems such as black smoke generation.

Accordingly it is an objective of the present invention to provide a diesel engine having an improved control of the exhaust and scavenging passage systems so as to ensure an improved combustion under various engine running conditions.

According to the present invention, this objective is performed in that the control unit comprises a start mode determination unit for determining an engine starting mode and the control unit comprises a starting control unit for adjusting the aperture of the exhaust control valve and the scavenging control valve during engine starting. Preferred embodiments of the invention are laid down in the further dependent claims.

Hereinafter the present invention is illustrated and explained in greater detail by means of a preferred embodiment in conjunction with the accompanying drawings wherein:
Fig. 1 A sectional front view of a two-cycle diesel engine equipped with an operation control device according to a preferred embodiment;

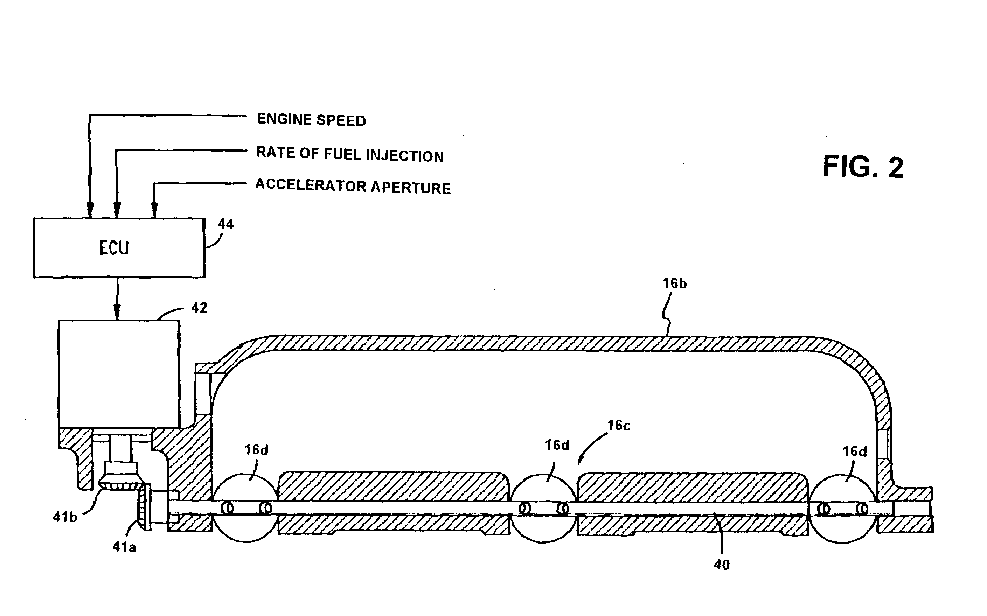

Fig. 2 A section taken along line II-II of Fig. 1;
Fig. 3 A section taken along line III-III of Fig. 1;
Fig. 4 A block diagram of the operation control device according to the embodiment of Fig. 1;
Fig. 5 A flow chart to explain the control operations for an exhaust control valve of the device of the foregoing embodiment prior to and during engine starting, idling and travelling;
Fig. 6 A flow chart to explain the control operations of the device of the foregoing embodiment;
Fig. 7 A symbolic diagram to explain the engine rpm ranges for detecting different engine operating conditions according to the embodiment of Fig. 1;
Fig. 8 A graph of engine rpm and shaft torque characteristics used to explain the content of the three-dimensional graphics for controlling the control valve aperture;
Fig. 9 A graph of the engine rpm, fuel injection rate, and exhaust control valve aperture to indicate the content of the three-dimensional graphics for controlling the aperture of the control valves according to the embodiment of Fig. 1;
Fig. 10 A flow chart to explain the control operations for a scavenging control valve according to the embodiment of Fig. 1 during various engine operating modes;
Fig. 11 A graph of engine rpm and torque characteristics to explain the content of the three-dimensional graphics for the foregoing embodiment of Fig. 10;
Fig. 12 A graph of engine rpm, fuel injection rate, and scavenging control valve aperture to explain the content of the three-dimensional graphics for the foregoing embodiment.
Fig. 13 A graph of the rpm range and scavenging control valve aperture for the foregoing embodiment;
Fig. 14 A flow chart to explain the control operations during a rapid acceleration of the engine.

In the Figures, 1 is a water cooled, three cylinder, two-cycle diesel engine. The bottom surface 2a of the cylinder block 3 of said engine 1 is attached to the crankcase 3. Three sets of crank chambers 4 are present in the bottom of area of the cylinder block 2 and crankcase 3. The cylinder head 5 is mounted to the top surface 2a of the above mentioned cylinder block 2.

Cylindrical plug retention holes 21c are present in the side surface 5a of the foregoing cylinder head 5, and these open into the main combustion chambers 8. pre combustion plugs 21 are inserted into said plug retention holes 21c and are held in place by bolts 23. The concave combustion area 21a of said pre combustion plugs 21, together with the concave combustion areas in the head 20b form the auxiliary combustion chambers 22. Linking holes 21b join said auxiliary combustion chambers with the foregoing main combustion chambers 8. Injectors 25a and glow plugs 25b have also been inserted into the foregoing auxiliary combustion chambers 22.

Three cylinder bores 2c present in a row in the above mentioned cylinder block 2. Pistons 7 have been inserted into said cylinder bores 2c so they are free to slide. The above mentioned main combustion chambers are comprised of the spaces bounded by the top surface of said pistons 7, the juncture surface 5a of the foregoing cylinder head 5, the above mentioned cylinder bores 2c, and the bottom surface of the pre combustion plugs 21 to be described below. Also the small ends 9a of the connecting rods 9 are linked to the foregoing pistons 7 by means of piston pins 10 and needle bearings 11. The large ends 9b of said connecting rods are linked to the crank pins 13 of the crankshaft 12 by needle bearings 14.

Three sets of air intake openings 15a are present in the bottom part of the above mentioned cylinder block 2 and these air intake openings 15a pass through to the foregoing respective crank chambers 4. An air intake manifold 16a is connected to each of said air intake openings. In addition, each of these crank chambers 4 is linked to the above mentioned air intake manifold 16a by oil return holes 51 in the bottom of each crank chamber and through the boss 52. Oil that has accumulated in the crank chambers 4 may thus be returned to the inside of the air intake manifold 16a.

Reed valves 17 have also been placed in the foregoing various air intake openings 15a. The structure of these reed valves 17 is such that the opening 17b, which is present in the valve bodies 17a is opened and closed by valve reed 17c. The reed valves 17 operate so that when the foregoing piston 7 rises, the negative pressure created in the crank chamber causes the valves to automatically open to let air into the crank chamber 4; when the piston descends, the positive pressure closes the reed valves to prevent the air from escaping.

Additionally, the opposite side of the above mentioned air intake openings 15a in the foregoing cylinder block 2 comprise scavenging adjustment openings 15b which link the aforementioned various crank chambers. Said scavenging adjustment openings 15b link the three crank chambers 4 with a common scavenging by pass chamber 16b, and the various linking openings in said scavenging by pass chamber 16b are fitted with scavenging control valves 16c which can be opened and closed.

The foregoing scavenging control valves 16c consist of a valve shaft 40 to which three valve plates 16d have been affixed, and said valve shaft 40 is rotatably driven by a step motor 42 by bevel gears 41a and 41b. This structure allows the above mentioned scavenging adjustment openings 15b to be simultaneously opened or closed by the foregoing valve plates 16d. ECU 44 controls the above mentioned step motor 42 to open and close the valve depending upon the operating state of engine 1 (engine rpm, rate of fuel injection, accelerator aperture, etc.).

For example, when the foregoing scavenging control valve 16c opens, the scavenging by pass chamber 16b is connected to the various crank chambers 4, thereby effectively expanding the volume of the crank chambers. This decreases the scavenging pressure and reduces the rate of air intake, causing the internal EGR gas to increase and the combustion temperature to decrease. When the aforementioned scavenging control valve 16c is closed, the crank chambers 4 assume their normal volumes and adequate scavenging takes place.

Additionally, a set of exhaust ports 18 is present in the top of the above mentioned cylinder block 2 for each of the cylinders. These exhaust ports 18 consist of a primary exhaust port 18b, which connects the primary exhaust opening 18a to the outside of the cylinder, and of a pair of auxiliary exhaust openings on the top side of the foregoing primary exhaust opening, which connect to the outside through the auxiliary exhaust port 18d which merges into the middle of the above mentioned primary exhaust port 18b. While not shown in the Figures, a catalyst is also attached downstream of the aforementioned exhaust port 18 to cleanse the exhaust gases.

The above mentioned auxiliary exhaust port 18d can be opened and closed by an exhaust control device 19. This exhaust control device 19 can vary the exhaust timing and compression ratio, and it is positioned coaxially with the auxiliary exhaust ports 18d in the foregoing cylinder block 3. The exhaust control device 19 consists of a drive mechanism 19b which can open and close three exhaust valves 19a that open and close the foregoing auxiliary exhaust ports 18d. The foregoing exhaust valve units 19a consist of round rods upon which an arc-shaped valve area has been formed, and comprise linking areas by which they are linked to each other. The above mentioned drive mechanism 19b connects the outside end of the foregoing exhaust valves 19a with a drive shaft, and said drive shaft is connected by a gear array to a drive motor, which operates to open and close the valves according to the operational state of the engine under control by the foregoing ECU 44.

For example, when the above mentioned exhaust control valve 19a is opened, the exhaust timing is the point where the top surface of piston 7 is positioned at the upper edge of the auxiliary exhaust opening 18c, which is more advanced than when the exhaust control valve 19a is closed. When the exhaust control valve 19a is opened, the compression ratio is determined by the volume of the primary combustion chamber 8 when the top surface of the piston 7 is at the upper edge of the auxiliary exhaust opening 18c, and is less than it is when the exhaust control valve 19a is closed.

Adjacent to and on both sides of the foregoing main exhaust opening in the above mentioned cylinder block 2 is a pair of main scavenging openings 18e. Opposite the aforementioned main exhaust opening 18a is opposing scavenging opening 18f, and these various scavenging openings 18e, 18f communicate with the crank chambers 4 of said cylinders.

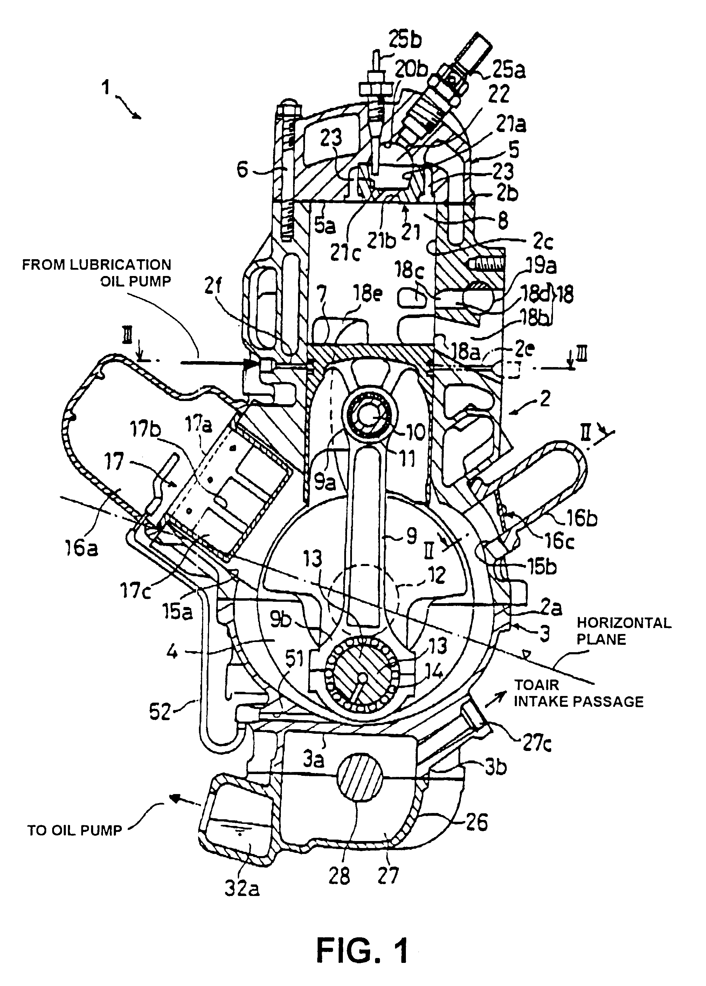

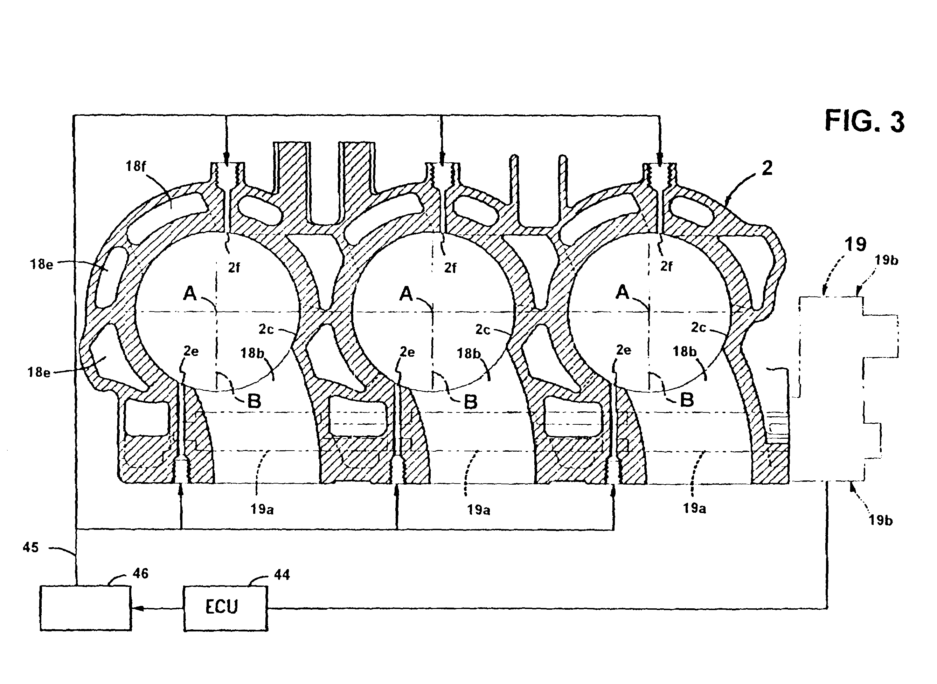

A pair of oil holes 2e and 2f are present in the cylinder block 2 for each of the cylinders to supply lubricating oil to the sliding surfaces of the pistons. Said oil holes 2e, 2f pass through the cylinder block 2 in a direction perpendicular to the crankshaft. When viewed in the direction of the cylinder axis A (Figure 3), they are displaced on either side of said cylinder axis A, and when viewed along the crankshaft direction (Figure 1), the above mentioned oil holes 2e, 2f can be seen to be linked to a lubricating oil pump 46 operationally controlled by ECU 44.

A projecting box-shaped boss 3b which opens downward and is positioned around the bottom wall perimeter of the above mentioned crankcase 3. A box shaped balancer cover 26 is attached to the opening on the top side of said boss 3b to create a balancer chamber 27. The balancer shaft 28 is housed within this balancer chamber 27 and it runs parallel to the crankshaft 12. The balancer shaft 28 is supported by bearings (not shown) that are held between the adjoining surfaces of the foregoing boss 3b and the balancer cover 26. The above mentioned balancer chamber also serves as a breather chamber which separates the oil and air mixture supplied from a pump (not shown). The separated air then passes through air outlet 27c to the air intake passage while the oil collects in oil reservoir 32a from where it is fed to an oil pump which circulates it to various places.

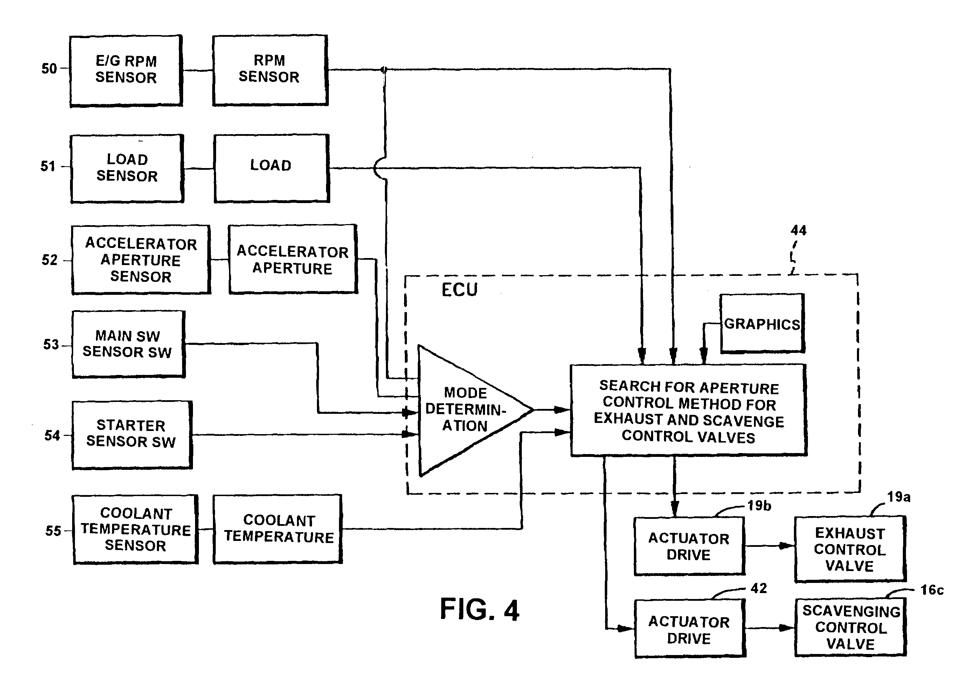

As shown in Figure 4, this embodiment is equipped with an engine rpm sensor 50, load sensor 51, and accelerator aperture sensor 52, a main switch sensor 53, and a starter switch sensor 54, a coolant temperature sensor 55, etc., which enable the detection of the engine operating condition.

Next, the operation of this embodiment will be described.

An outline of the control operations of the device of this embodiment will be described with reference to Figure 4. ECU 44 determines the current engine operational mode from the information it receives on engine rpm, engine load, accelerator aperture and the contact conditions for the main and starter switches. Based upon the determination of the operational mode, the engine rpm, engine load, coolant temperature and the like, it controls the apertures of the above mentioned exhaust control valve 19a and scavenging control valve 16c based upon a graphics of operating parameters and the like to control the opening and closing of each of the control valves 19a and 16c.

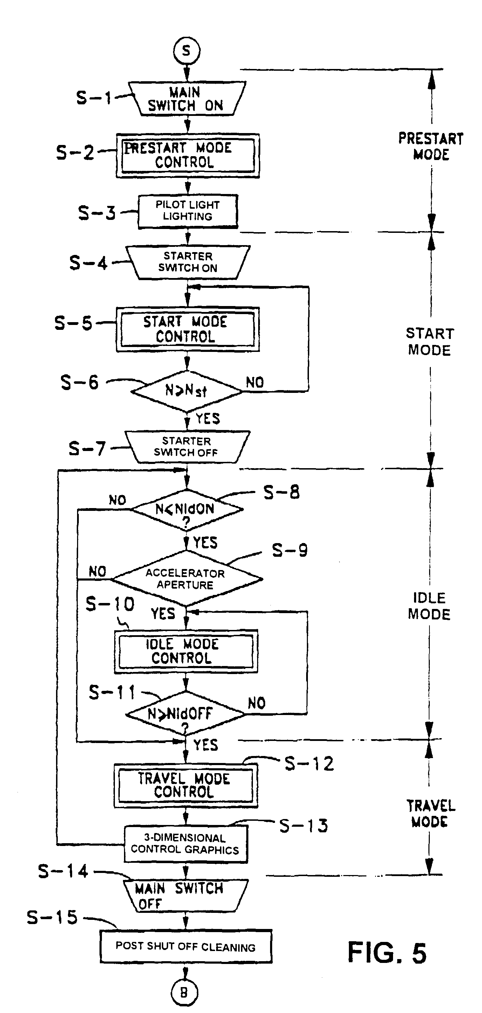

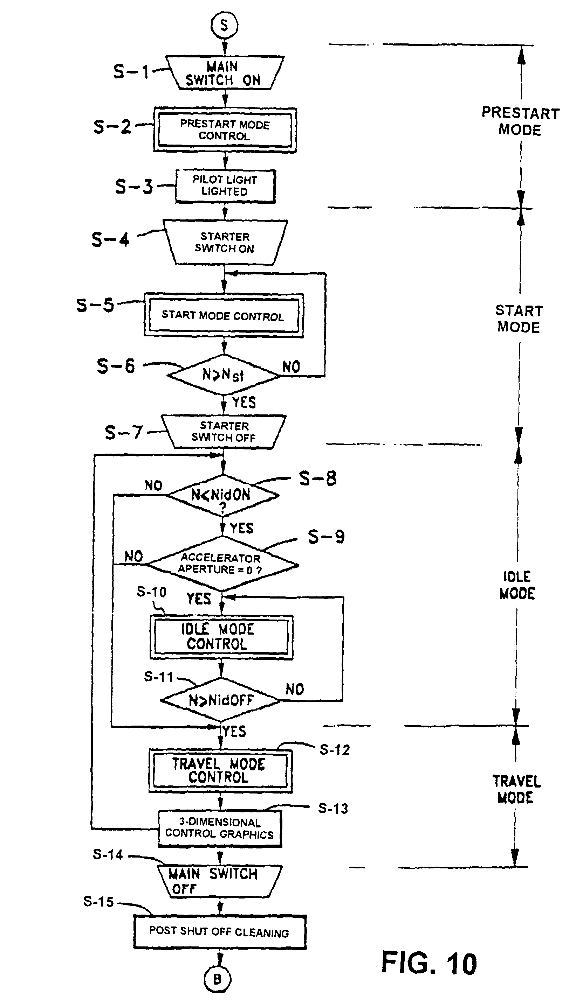

The control of the above mentioned exhaust control valve 19a is based upon the control operations shown in Figures 5 through 9, and the control of the scavenging control valve 16c is based upon the control operations shown in Figures 10 through 13, which describe these control operations in detail.

The following are the main features of the control operations for the exhaust control valve 19a. When the ignition key is turned to the "accessory" position, the main switch is on (Step S1), and at this time, since the engine rpm is 0, it is determined that the engine is in the prestart mode, and the below-listed prestarting mode control is performed (Step S2). To wit, to prevent it from sticking when the engine is stopped, the above mentioned exhaust control valve undergoes an opening and closing operation prior to starting that serves to clean said exhaust control valve 19a. After that, the aforementioned exhaust control valve 19a is rotated to its fully closed position. When this prestart mode control is completed, a pilot light is lighted to indicate that the prestart preparations have been completed (Step S3).

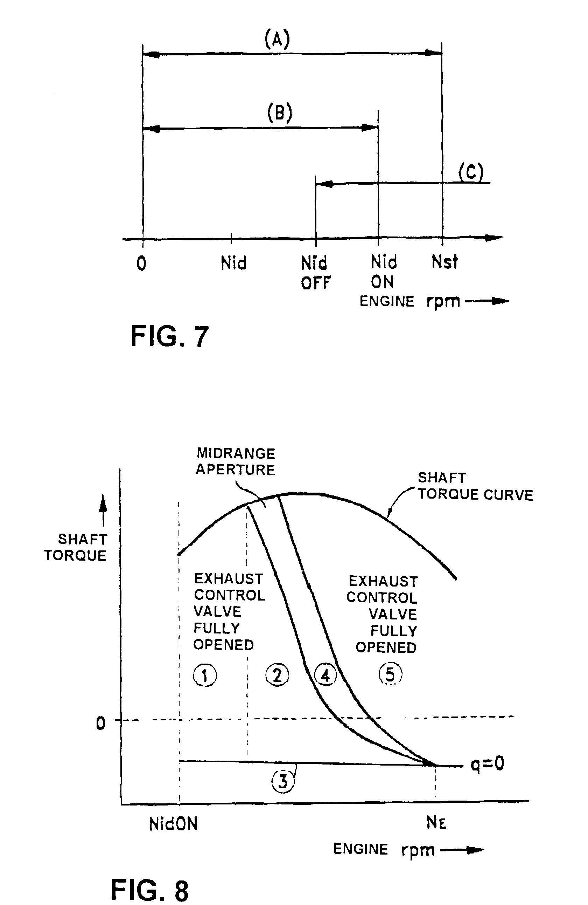

Next, when the ignition key is rotated to the "start" position, the starter switch turns on (Step 4). A determination is then made that the engine is in the starting mode due to the fact that the engine rpm is at the cranking rpm level (about 450 rpm), which is lower than Nst, and the exhaust control valve is maintained in the fully closed position as a part of the start mode control (Step S5). When the engine rpm increase above the Nst level, then the aforementioned starter switch is turned off (Steps S6, S7). However, if the foregoing engine rpm is lower than Nst as shown by (A) in Figure 7 (in the start mode range), there is a return to the above mentioned start mode control (Step S5).

After the foregoing starter switch has been turned off, and when the engine rpm level is under the NidON level as shown by (B) in Figure 7 (when the idle switch is on and operations are in the idle mode range), if the accelerator aperture is 0 (Steps S8, S9) then a determination is made that the engine is in the idle mode, and the idle mode control is performed by stably maintaining the exhaust control valve 19a in the fully closed position (Step S10). The control program keeps returning to this idle mode control so long as the engine rpm remains under NidOFF (Step S11).

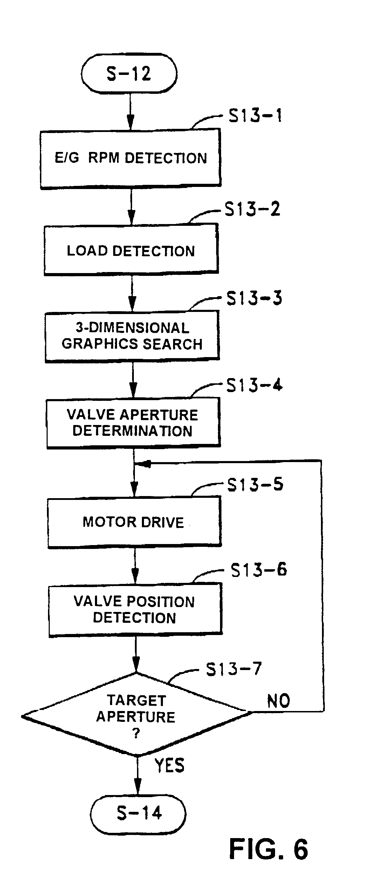

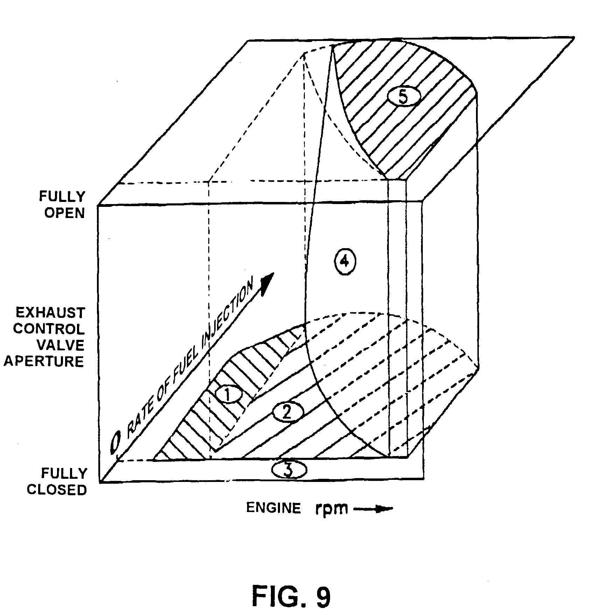

When the accelerator pedal is pressed, the engine rpm rises above the NidOFF level as shown by (C) in Figure 7, and a determination is made that the engine is in the travel mode, with control performed accordingly based on a three-dimensional control graphics (Steps S12, S13). As shown in Figure 6, this three-dimensional graphics control is based upon the engine rpm and engine load: the valve aperture for the above mentioned exhaust control valve 19a is determined by three-dimensional graphics as shown in Figures 8 and 9 (Steps S13-1 through S13-4) by means of the above mentioned drive mechanism 19b driving the foregoing exhaust control valve 19a (Step S13-5). Comparisons are then made between the detected valve aperture and the target valve aperture, and feedback control is performed (Steps S13-6, S13-7).

Then, when the ignition switched is rotated to the "off' position, the main switch is turned off (Step S14), and when the engine stops, the travel mode is terminated. To prevent the foregoing exhaust control valve 19a from sticking, said exhaust control valve 19a is then opened and closed to complete a cleaning operation (Step S15).

The contents of the three-dimensional graphics will be explained with reference to Figures 8 and 9. In the Figures (1) represents the engine's low speed range (in the vicinity of, or slightly above the NidON rpm range). In this operation range, the exhaust control valve remains fully closed regardless of the rate of fuel injection q. The rate of fuel injection q corresponds to the shaft torque (load). From this, the pressure wave of the exhaust gas can be effectively utilized to improve filling efficiency, increasing the output by the amount needed to inhibit the generation of smoke. Since the compression ratio can be increased, the combustion properties can be improved, thereby making it possible to lower HC emissions and improve fuel economy.

Also, (2) and (5) indicate the middle and high rpm ranges; the more the rpm is increased over the mid-speed rpm, the more the exhaust control valve 19a's fully closed range gradually approaches the low fuel injection rate level. In other words, the greater the rate of fuel injection (high load), even if the engine rpm is low, the more the exhaust control valve is opened, the higher the engine rpm and the greater the expansion of the fully open range of the exhaust control valve 19a. (4) represents a middle aperture range.

Also, (3) represents the condition when the foregoing rate of fuel injection q is 0, that is, when the accelerator opening speed is 0, in the so-called engine braking operational state. In this operational range, the exhaust control valve 19a is fully closed, no matter what the engine rpm. The cross section of the exhaust passage is reduced thereby, reducing in turn the rate of air intake into the combustion chambers, and the lowering of the catalytic temperature also will be inhibited. The control operations during engine braking will be described below.

The control operations for the scavenging control valve 16c may be summarized as follows. Detailed explanation of Figure 10 and steps similar to the above will be omitted from the explanation of operations. When the main switch is turned on (Step S1) and a determination is made that the engine is in the prestart mode, the initial position of the scavenging valve 16c is detected, and control is exercised to fully close said scavenging control valve (Step S2). In this initial detection process, rotation of the scavenging control valve is performed by the above mentioned step motor 42. The magnitude is by the number of steps, it would take to rotate it from the fully open to the fully closed position, plus a few extra steps to be sure and then said valve is deemed fully closed at the point where further rotation becomes impossible. That step number is then substituted for the then existing step number corresponding to the fully closed position.

It would also be possible to substitute a DC motor and a voltage sensor for the foregoing step motor, and in that case, the DC motor would be driven until changes ceased in the response of the above mentioned voltage sensor due to the scavenging valve being closed, and the point where the aforementioned response zeroed out would be taken as the initial position for the valve aperture.

When the above mentioned prestart mode control has been completed, a pilot light is lighted, and when the ignition key is turned to the "start" position, the starter switch is turned ON and a determination is made that the engine is in the starting mode, whereupon starting mode control is excercised to maintain the scavenging control valve 16c in the fully closed position (Steps S2-S5).

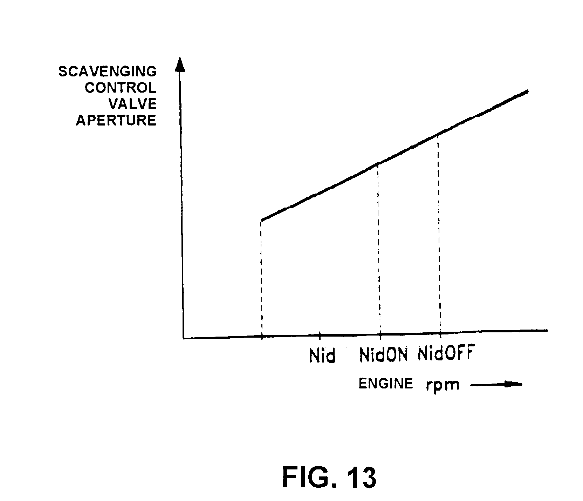

Then, when the engine rpm rises above Nst, the foregoing starter switch is turned off, and while the engine rpm is less than NidON, if the accelerator aperture is zero, a determination is made that the engine is in the idle mode (Steps S5-S9), and the aperture of the scavenging control valve is adjusted in proportion to the engine rpm (see the two-dimensional graphics in Figure 13) under idle mode control (Step S10).

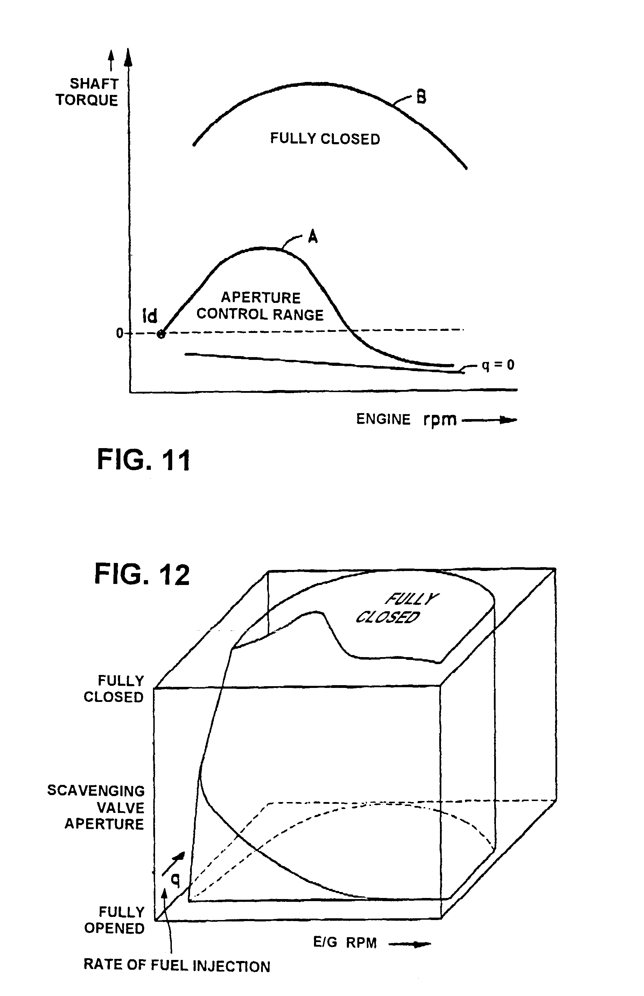

When the accelerator pedal is pressed or the engine rpm rises above the NidOFF level a determination is made that the engine is in the travel mode and control is exercised based on the three-dimensional graphics (Steps S11-S13). This three-dimensional graphics control is of the same type that was exercised for the exhaust control valve 19a, however, the three-dimensional graphicss are the ones characterized in Figures 11 and 12.

Figure 11 shows the engine rpm on the horizontal axis and the shaft torque on the vertical axis; curves A and B are the normal and maximum torque curves, respectively. Figure 12 shows the valve apertures of the scavenging control valve using engine rpm and rate of fuel injection as parameters. The rate of smoke generation is approximately 0% in the region under the torque generation curve A, and it increases as the torque approaches curve B, where it reaches 20%. In the operating range from curve A to B, the scavenging control valve 16c is fully closed, and in the region under curve A, that is, the region where no smoke is generated, aperture control is exercised over the scavenging control valve 16c. In this case, when engine rpm is in the low to middle range, there is a broad range of aperture control for the scavenging control valve 16c, in the high rpm range, it is maintained in the fully closed position irrespective of the fuel injection rate (shaft torque) q.

In the engine of this embodiment, the apertures of the exhaust control valve 19a and the scavenging control valve 16c were controlled according to the operational mode of the engine, and the effects discussed further below, were observed. First, the exhaust control valve 19a is rotated to the fully closed position in the prestart mode, and maintained in that position in the starting mode to improve the starting properties of the engine.

Also, when in the idle mode, the foregoing exhaust control valve 19a is maintained in the fully closed position so that the exhaust gas pressure wave can be effectively utilized to improve the filling efficiency, inhibit the generation of smoke, and improve output by that same magnitude. Also, the closure of the exhaust control valve 19a increases the compression ratio to improve combustion properties, decrease HC emissions, and improve fuel economy.

Further, after the initial position was first detected and the scavenging control valve 16c closed during the starting mode, tight closure of the scavenging bypass passage is assured, thereby avoiding the degradation of starting properties that usually result from having a scavenging bypass. Tight closure of the scavenging control valve 16c is also assured when the engine is operating in the high load operating range, thus preventing the generation of smoke when operating under high load conditions.

Further, by opening the scavenging control valve 16c when the engine is operating in the range beneath the normal torque curve as shown in Figure 11, in other words in the range where no smoke is generated, the following effects are obtained even while avoiding smoke generation. 1) Scavenging pressure is decreased by the opening of the scavenging control valve 16c, and the rate of scavenging is thereby reduced. Pumping loss is reduced and fuel economy while idling is improved. 2) Improvements in the internal EGR ratio lower the combustion temperature, which makes it possible to greatly reduce NOₓ emissions. 3) The resulting reduction in the volume of intake air reduces air intake noise.

It is usually the case that when conventional diesel engines undergo engine braking when the fuel is cut, the absence of a throttle valve allows large volumes of low temperature air to be exhausted through the exhaust system. The catalyst temperature in the exhaust system may thereby be reduced to below its activation level and concern about diminished exhaust gas cleansing capacity may arise. The engine according to an embodiment of the invention prevents such occurrences.

When the accelerator aperture is zero and the engine rpm is above a certain level, then a determination is made that the engine is in the engine braking mode. In addition to cutting the fuel supply, the above described scavenging control valve is opened, and the above described exhaust control valve 19a is fully closed at the same time.

By opening the scavenging control valve 16c as described above, the volume of the various crank chambers is effectively increased to reduce the scavenging pressure and the rate of scavenging, that is, the rate of air intake into the combustion chambers is decreased. Accordingly, the rate of low temperature air being exhausted through the exhaust system decreases, inhibiting the cooling of the catalyst. Also, the closing of the exhaust control valve 19a increases the compression ratio, and the heat of compression further inhibits the cooling of the foregoing catalyst. In addition, the foregoing heat of compression sustains temperatures in the combustion chamber, so that when fuel injection is resumed, misfiring, white smoke and HC generation are effectively inhibited.

In this respect and during rapid acceleration and assuming that there will be delays in the operational response of the above described exhaust control valve, etc. as the valves move into their prescribed positions, black smoke generation might occur through an excess supply of fuel. The diesel engine according to a preferred embodiment of the invention resolves this issue, as described below.

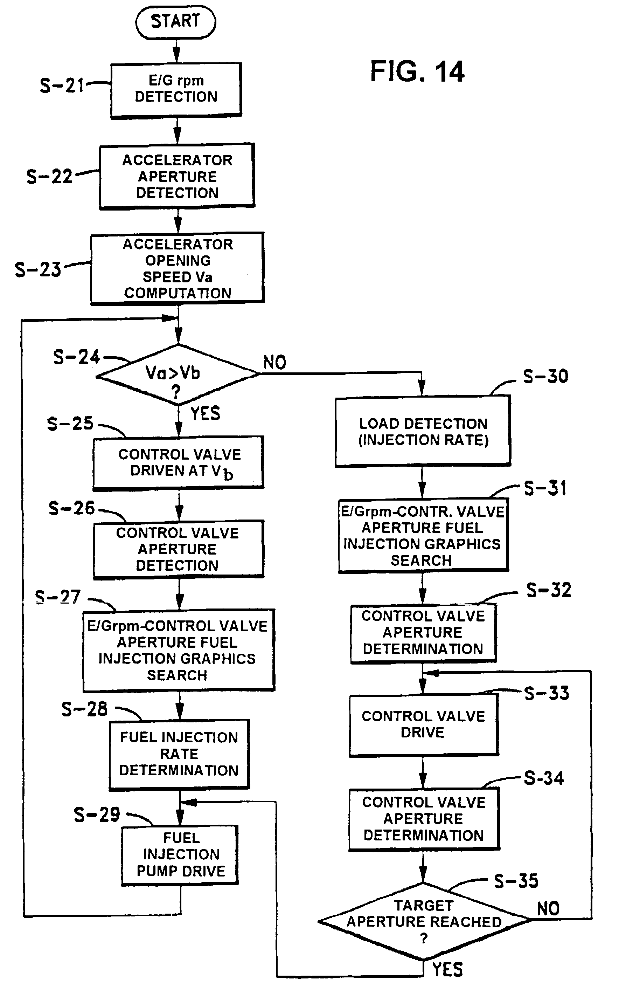

As shown in Figure 14, the control device computes the accelerator opening speed Va from the detected values for engine rpm and accelerator aperture, and then compares this value with the maximum operating speed Vb for the above mentioned exhaust control valve 19a and scavenging control valve 16c. If the accelerator opening speed Va is higher than the maximum operating speed Vb, then the foregoing exhaust control valve 19a is opened, and the scavenging control valve 16c is closed at their respective maximum operating speeds, and in addition, the apertures of those control valves 19a, 16c are detected (Steps S25, 26). The three-dimensional graphics described for the first embodiment above is searched in order to determine the rate of fuel injection corresponding to the control valve apertures, and the fuel injection pump is controlled accordingly (Steps S27-29). The decision on the rate of fuel to be injected is based upon the requirement for the exhaust control valve 19a and the scavenging control valve 16c, whichever is lower.

Also, if it is determined in the above mentioned Step S24 that the accelerator opening speed Va is less than the valve operation speed Vb, then the engine load is detected (Step S30) and the three-dimensional graphics is searched for the proper valve apertures (Steps S31, 32), the valve drive motors are operated to achieve said apertures (Step S33), and then the valve position is detected to make any required corrections for the target aperture (Steps S34, 35).

Thus, in the foregoing embodiment, when the accelerator opening speed is greater than the control valve operational speed, the control valve aperture position takes priority and the rate of fuel injection is determined in accordance with said aperture. Accordingly when an operational delay of the control valves occurs during rapid acceleration, the rate of fuel injection is gradually increased in parallel with said control valve aperture to prevent problems such as the generation of black smoke.

The foregoing embodiments comprised a scavenging chamber 16b which was linked to the respective crank chamber to control the rate of scavenging, but it would also be possible to set up independent scavenging chambers for each crank chamber, with their own scavenging control valves to open and close off said chambers.

As described above, the engine operation control device for two-cycle engines in Claim 1 of this invention determines the operational mode of the engine based on its operating condition and controls the control valves based upon said operational mode during the prestart stage, during starting and in each operational mode to realize the appropriate apertures for the above mentioned exhaust and scavenging control valves. Engine starting properties and engine emissions during starting are improved thereby.

The engine operation control device according to a furhter aspect of this invention closes the above mentioned exhaust control valve and/or opens the above mentioned scavenging control valve during engine braking to reduce the volume of air intake and to prevent cooling of the catalyst, thereby improving the cleansing performance of said catalyst.

The engine operation control device according to a further aspect of this invention makes corrections to the rate of fuel injection at those times when the accelerator opening speed is greater than the maximum operational speed of the exhaust control valve and the scavenging control valve, based on the apertures of the foregoing exhaust control valve and scavenging control valve, which are being set based on engine rpm and accelerator aperture, to prevent problems such as the generation of black smoke caused by the operational delay of the exhaust control valve and the scavenging control valve with respect to the rapid increase in the rate of fuel injection.

## Claims

1. Two-cycle diesel engine comprising an exhaust passage (18) with an exhaust control valve (19a) for controlling the aperture of said exhaust passage (18) and a scavenge passage arrangement having a scavenging adjustment opening (15b) which links the crankchamber (4) with a scavenging bypass chamber (16b), the linking opening in said scavenging bypass chamber (16b) is fitted with a scavenging control valve (16c) for controlling the rate of scavenging, wherein a detection means (50, 51, 52, 53, 54, 55) is provided for detecting an engine operating condition and a control unit (44) is provided for controlling the aperture of said exhaust control valve (19a), and said scavenging control valve (16c) respectively, in response to said engine operating condition, **characterized in that** the control unit (44) comprises a start mode determination unit for determining an engine starting mode and the control unit (44) comprises a starting control unit for adjusting the aperture of the exhaust control valve (19a) and the scavenging control valve (16c) during engine starting.

2. Two-cycle diesel engine as claimed in claim 1, **characterised in that** the start mode determination unit is connected with a main switch sensor (53) for detecting an accessory position of an ignition key and an engine speed sensor (50) for detecting an engine speed (RPM=0) corresponding to a pre-start mode, wherein the exhaust control valve (19a) and the scavenging control valve (16c) are in their fully closed position.

3. Two-cycle diesel engine as claimed in claim 1 or 2, **characterised in that** the start mode determination unit is connected with a starter switch sensor (54) and an engine speed sensor (50) for detecting an engine cranking (0<RPM<N^{st}) corresponding to the starting condition, wherein the exhaust control valve (19a) and the scavenging control valve (16c) are maintained in their fully closed position.

4. Two-cycle diesel engine as claimed in at least one of claims 1 to 3, **characterised in that** the control unit (44) further comprises an engine braking determination unit for determining an engine braking operational state, and the control unit (44) further comprises an engine braking control unit for adjusting the aperture of the exhaust control valve (19a) and/or the scavenging control valve (16c) in response to the engine braking operational state, and a fuel injecting control means is provided for interrupting fuel supply during engine braking.

5. Two-cycle diesel engine as claimed in claim 4, **characterised in that** said engine braking determination unit is connected with an accelerator aperture sensor (52) for detecting an accelerator opening and an engine speed sensor (50) for detecting an engine speed corresponding to the engine braking operational condition, wherein the exhaust control valve (19a) and/or the scavenging control valve (16c) are set to their fully closed position.

6. Two-cycle diesel engine as claimed in at least one of claims 1 to 5, **characterised in that** the control unit (44) further comprises an engine idling determining unit for detecting engine idling, and the control unit (44) further comprises an idling control unit for adjusting the exhaust control valve (19a) and the scavenging control valve (16c) in response to engine idling.

7. Two-cycle diesel engine as claimed in claim 6, **characterised in that** the idling control unit comprises a memory means for adjusting the scavenging control valve (16c) in response to engine speed during the engine idling operational state.

8. Two-cycle diesel engine as claimed in at least one of claims 1 to 7, **characterised in that** the control unit (44) further comprises a travelling control unit for adjusting the aperture of the exhaust control valve (19a) and the scavenging control valve (16c) in response to engine speed and engine load during an engine travelling operational condition other than an engine starting condition, an engine braking condition or an engine idling condition.

9. Two-cycle diesel engine as claimed in at least one of claims 1 to 8, **characterised in that** the control unit (44) is formed by an ECU (electronic control unit).

10. Two-cycle diesel engine as claimed in at least one of claims 1 to 9, **characterised in that** the control unit (44) further comprises a memory for storing aperture setting values for the exhaust control valve (19a) and the scavenging control valve (16c) in response to engine speed and engine load, and actuating means are provided for adjusting the aperture of said exhaust control valve (19a) and said scavenging control valve (16c) in response to said aperture setting values.

11. Two-cycle diesel engine as claimed in claim 10, **characterised in that** said actuating means is formed by a stepper motor.

12. Two-cycle diesel engine as claimed in at least one of claims 1 to 11, **characterised in that** the detection means comprises an acceleration detection unit for detecting the accelerator aperture, and a fuel injection correction means is provided for adjusting the fuel injection rate in response to the aperture of the exhaust control valve (19a) and the scavenging control valve (16c) during a rapid acceleration, wherein the accelerator opening speed exceeds a maximum operating speed of said exhaust control valve (19a) and said scavenging control valve (16c).

## Patentansprüche

1. Zweitakt-Dieselmotor mit einem Abgaskanal (18), der ein Abgassteuerventil (19a) zur Steuerung der Öffnung des Abgaskanals (18) aufweist, und einer Überstromdurchlaßanordnung, die eine Überstromanpassungsöffnung (15b) aufweist, welche das Kurbelghäuse (4) mit einer Überstromumgehungskammer (16b) verbindet, die Verbindungsöffnung in der Überstromumgehungskammer (16b) ist mit einem Überstromsteuerventil (16c) zur Steuerung der Rate des Überstroms versehen, wobei eine Erfassungseinrichtung (50,51,52,53,54,55) zur Erfassung eines Motorbetriebszustandes vorgesehen ist und eine Steuereinheit (44) jeweils zur Steuerung der Öffnung des Abgassteuerventils (19a) und des Überstromsteuerventils (16c) mit Bezug auf den Motorbetriebszustand vorgesehen ist, **dadurch gekennzeichnet,** daß die Steuereinheit (44) eine Startmodus-Ermittlungseinrichtung zur Ermittlung eines Motor-Start-Modus aufweist, und die Steuereinheit (44) eine Start-Steuereinheit zur Einstellung der Öffnung des Abgassteuerventils (19a) und des Überstromsteuerventils (16c) während des Motorstarts aufweist.

2. Zweitakt-Dieselmotor nach Anspruch 1, **dadurch gekennzeichnet,** daß die Startmodus-Ermittlungseinrichtung mit einem Hauptschaltersensor (53) zur Erfassung einer EIN-Stellung eines Zündschlüssels und einem Motordrehzahlsensor (50) zur Erfassung einer Motordrehzahl (U/min=0) entsprechend einem Vor-Start-Modus verbunden ist, wobei das Abgassteuerventil (19a) und das Überstromsteuerventil (16c) in ihrer vollständig geschlossenen Stellung sind.

3. Zweitakt-Dieselmotor nach Anspruch 1 oder 2, **dadurch gekennzeichnet,** daß die Startmodus-Ermittlungseinrichtung mit einem Startschaltersensor (54) und einem Motordrehzahlsensor (50) zur Ermittlung eines Motoranlassens (0<U/min<N^{st}) entsprechend der Startbedingungen verbunden ist, wobei das Abgassteuerventil (19a) und das Überstromsteuerventil (16c) in ihrer vollständig geschlossenen Stellung gehalten sind.

4. Zweitakt-Dieselmotor nach mindestens einem der Ansprüche 1 bis 3, **dadurch gekennzeichnet,** daß die Steuereinheit (44) weiterhin eine Motorbrems-Ermittlungseinrichtung zur Ermittlung eines Motorbremsbetriebszustandes aufweist, und die Steuereinheit (44) weiterhin eine Motorbrems-Steuereinheit zur Einstellung der Öffnung des Abgassteuerventils (19a) und/der des Überstromsteuerventils (16c) in Abhängigkeit vom Motorbremsbetriebszustand aufweist, und eine KraftstoffeinspritzSteuereinheit zur Unterbrechung der Kraftstoffversorgung während des Motorbremsens vorgesehen ist.

5. Zweitakt-Dieselmotor nach Anspruch 4, **dadurch gekennzeichnet,** daß die Motorbrems-Ermittlungseinrichtung mit einem Beschleunigeröffnungs-Sensor (52) zur Erfassung einer Beschleunigeröffnung und einem Motordrehzahlsensor (50) zur Erfassung einer Motordrehzahl entsprechend der Motorbremsbetriebsbedingung verbunden ist, wobei das Abgassteuerventil (19a) und/oder das Überstromsteuerventil (16c) in ihre vollständig geschlossene Stellung gesetzt sind.

6. Zweitakt-Dieselmotor nach mindestens einem der Ansprüche 1 bis 5, **dadurch gekennzeichnet,** daß die Steuereinheit (44) weiterhin eine Motorleerlauf-Ermittlungseinrichtung zum Feststellen von Motorleerlauf aufweist und die Steuereinheit (44) weiterhin eine Leerlauf-Steuereinheit zur Einstellung des Abgassteuerventils (19a) und des Überstromsteuerventils (16c) in Abhängigkeit vom Motorleerlauf aufweist.

7. Zweitakt-Dieselmotor nach Anspruch 6, **dadurch gekennzeichnet,** daß die Leerlauf-Steuereinheit eine Speichereinrichtung zur Einstellung des Überstromsteuerventils (16c) in Abhängigkeit von der Motordrehzahl während des Motorleelaufbetriebszustands aufweist.

8. Zweitakt-Dieselmotor nach mindestens einem der Ansprüche 1 bis 7, **dadurch gekennzeichnet,** daß die Steuereinheit (44) weiterhin eine Fahr-Steuereinheit aufweist, um die Öffnung des Abgassteuerventils (19a) und des Überstromsteuerventils (16c) in Abhängigkeit von der Motordrehzahl und Motorlast während eines Motorfahrbetriebszustandes anders als in einem Motorstartzustand, einem Motorbremszustand oder einem Motorleelaufzustand einzustellen.

9. Zweitakt-Dieselmotor nach mindestens einem der Ansprüche 1 bis 8, **dadurch gekennzeichnet,** daß die Steuereinheit (44) von einer ECU (elektronische Steuereinheit) gebildet wird.

10. Zweitakt-Dieselmotor nach mindestens einem der Ansprüche 1 bis 9, **dadurch gekennzeichnet,** daß die Steuereinheit (44) weiterhin einen Speicher zur Speicherung von Öffnungs-Setzwerten für das Abgassteuerventil (19a) und das Überstromsteuerventil (16c) in Abhängigkeit von der Motordrehzahl und der Motorlast aufweist, und daß eine Betätigungseinrichtung zur Einstellung der Öffnung des Abgassteuerventils (19a) und des Überstromsteuerventils (16c) in Abhängigkeit von diesen Öffnungs-Setzwerte vorgesehen ist.

11. Zweitakt-Dieselmotor nach Anspruch 10, **dadurch gekennzeichnet,** daß die Betätigungseinrichtung durch einen Schrittmotor gebildet ist.

12. Zweitakt-Dieselmotor nach mindestens einem der Ansprüche 1 bis 11, **dadurch gekennzeichnet,** daß die Erfassungseinrichtung eine Beschleunigungserfassungseinrichtung zur Erfassung der Beschleunigeröffnung aufweist, und eine Kraftstoffeinspritzkorrektureinrichtung zur Einstellung einer Kraftstoffeinspritzrate in Abhängigkeit von der Öffnung des Abgassteuerventils (19a) und des Überstromsteuerventils (16c) während einer schnellen Beschleunigung vorgesehen ist, während der Beschleunigeröffnungsgeschwindigkeit eine maximale Arbeitsgeschwindigkeit des Abgassteuerventils (19a) und des Überstromsteuerventils (16c) überschreitet.

## Revendications

1. Moteur diesel à deux temps comprenant un passage d'échappement (18) avec une soupape de commande d'échappement (19a) pour commander l'ouverture dudit passage d'échappement (18) et un système formant passage de balayage ayant une ouverture d'ajustement du balayage (15b) qui relie la chambre de vilebrequin (4) à une chambre de dérivation du balayage (16b), l'ouverture de liaison formée dans ladite chambre de dérivation du balayage (16b) étant dotée d'une soupape de commande de balayage (16c) pour commander le débit du balayage, dans lequel un moyen de détection (50, 51, 52, 53, 54, 55) est prévu pour détecter un état de fonctionnement du moteur et une unité de commande (44) est prévue pour commander respectivement l'ouverture de ladite soupape de commande d'échappement (19a) et ladite soupape de commande de balayage (16c), en réponse audit état de fonctionnement du moteur, caractérisé en ce que l'unité de commande (44) comprend une unité de détermination du mode de démarrage pour déterminer un mode de démarrage du moteur, et l'unité de commande (44) comprend une unité de commande de démarrage pour ajuster l'ouverture de la soupape de commande d'échappement (19a) et la soupape de commande de balayage (16c) pendant le démarrage du moteur.

2. Moteur diesel à deux temps selon la revendication 1, caractérisé en ce que l'unité de détermination du mode de démarrage est connectée à un capteur d'interrupteur principal (53) pour détecter une position d'accessoires d'une clé d'allumage et à un capteur de vitesse du moteur (50) pour détecter une vitesse du moteur (RPM=0) correspondant à un mode de pré-démarrage, dans lequel la soupape de commande d'échappement (19a) et la soupape de commande de balayage (19c) sont à leur position entièrement fermée.

3. Moteur diesel à deux temps selon la revendication 1 ou 2, caractérisé en ce que l'unité de détermination du mode de démarrage est connectée à un capteur d'interrupteur de démarrage (54) et à un capteur de vitesse du moteur (50) pour détecter une vitesse du moteur (0<RPM<N^{st}) correspondant à la condition de démarrage, dans lequel la soupape de commande d'échappement (19a) et la soupape de commande de balayage (16c) sont maintenues à leur position entièrement fermée.

4. Moteur diesel à deux temps selon l'une quelconque des revendications 1 à 3, caractérisé en ce que l'unité de commande (44) comprend en outre une unité de détermination de freinage du moteur pour déterminer un état fonctionnel de freinage du moteur, et l'unité de commande (44) comprend en outre une unité de commande de freinage du moteur pour ajuster l'ouverture de la soupape de commande d'échappement (19a) et/ou de la soupape de commande de balayage (16c) en réponse à l'état fonctionnel de freinage du moteur, et en ce qu'un moyen de commande d'injection de carburant est prévu pour interrompre la fourniture de carburant pendant le freinage du moteur.

5. Moteur diesel à deux temps selon la revendication 4, caractérisé en ce que ladite unité de détermination de freinage du moteur est connectée à un capteur d'ouverture d'accélérateur (52) pour détecter une ouverture d'accélérateur et à un capteur de vitesse du moteur (50) pour détecter une vitesse du moteur correspondant à l'état fonctionnel de freinage du moteur, dans lequel la soupape de commande d'échappement (19a) et/ou la soupape de commande de balayage (16c) sont réglées à leur position entièrement fermée.

6. Moteur diesel à deux temps selon l'une quelconque des revendications 1 à 5, caractérisé en ce que l'unité de commande (44) comprend en outre une unité de détermination de ralenti du moteur pour détecter le ralenti du moteur, et en ce que l'unité de commande (44) comprend en outre une unité de commande de ralenti pour ajuster la soupape de commande d'échappement (19a) et la soupape de commande de balayage (16c) en réponse au fonctionnement ralenti du moteur.

7. Moteur diesel à deux temps selon la revendication 6, caractérisé en ce que l'unité de commande de ralenti comprend un moyen à mémoire pour ajuster la soupape de commande de balayage (16c) en réponse à la vitesse du moteur pendant l'état fonctionnel de ralenti du moteur.

8. Moteur diesel à deux temps selon l'une quelconque des revendications 1 à 7, caractérisé en ce que l'unité de commande (44) comprend en outre une unité de commande de marche pour ajuster l'ouverture de la soupape de commande d'échappement (19a) et la soupape de commande de balayage (16c) en réponse à la vitesse du moteur et à la charge du moteur pendant un état fonctionnel de marche du moteur autre qu'un état de démarrage du moteur, qu'un état de freinage du moteur, ou qu'un état de ralenti du moteur.

9. Moteur diesel à deux temps selon au moins l'une des revendications 1 à 8, caractérisé en ce que l'unité de commande (44) est constituée par une unité de commande électronique (ECU).

10. Moteur diesel à deux temps selon au moins l'une des revendications 1 à 9, caractérisé en ce que l'unité de commande (44) comprend en outre une mémoire pour stocker des valeurs de réglage d'ouverture pour la soupape de commande d'échappement (19a) et la soupape de commande de balayage (16c) en réponse à la vitesse du moteur et à la charge du moteur, et en ce que des moyens d'actionnement sont prévus pour ajuster l'ouverture de ladite soupape de commande d'échappement (19a) et de ladite soupape de commande de balayage (16c) en réponse auxdites valeurs de réglage d'ouverture.

11. Moteur diesel à deux temps selon la revendication 10, caractérisé en ce que ledit moyen d'actionnement est constitué par un moteur pas-à-pas.

12. Moteur diesel à deux temps selon au moins l'une des revendications 1 à 11, caractérisé en ce que les moyens de détection comprennent une unité de détection d'accélération pour détecter l'ouverture de l'accélérateur, et en ce qu'un moyen de correction de l'injection de carburant est prévu pour ajuster le débit d'injection de carburant en réponse à l'ouverture de la soupape de commande d'échappement (19a) et de la soupape de commande de balayage (16c) pendant une accélération rapide, dans lequel la vitesse d'ouverture de l'accélérateur dépasse une vitesse de fonctionnement maximale de ladite soupape de commande d'échappement (19a) et de ladite soupape de commande de balayage (16c).
